# EUROPEAN PATENT APPLICATION

(11) **EP 4 287 385 A1**
(43) Date of publication of application: **06.12.2023**
(21) Application number: 22305797.7
(22) Date of filing: 31.05.2022
(51) Int. Cl.: H01M 50/503, H01M 50/505, H01M 50/516

(54) **BATTERY BUSBAR**

(71) Applicant: EnerSys Delaware Inc., Reading, PA 19605 (US)
(72) Inventor: KHAMMASSI, Montassar, 62033 Arras Cedex (FR)
(74) Representative: Abel & Imray LLP

(57) **Abstract**

The invention relates to a battery and battery busbar. The battery busbar comprises a conducting contact plate configured to contact a terminal of a first battery cell and a terminal of a second battery cell. A lip or lips extend perpendicular to the contact plate, such that the lip or lips engage with an external perimeter of one or both of the terminal of the first battery cell and terminal of the second battery cell. This secures the busbar in position with respect to the terminals of the first battery cell and second battery cell in at least two directions. The busbar may then be secured in position relative to the terminals in a third direction, for example by welding or mechanical fasteners.

## Description

### Field of the Invention

The present invention concerns a battery busbar. More particularly, but not exclusively, this invention concerns a battery busbar and a battery module.

### Background of the Invention

Battery modules often comprise a plurality of battery cells, with the terminals of the battery cells connected by one or more busbars. Typically, the busbars are held in place with a busbar holder, which secure the busbar to the terminals during a welding process. The busbar holders often also include guides and/or clips for securing wiring of sensors connected to the battery cells, and sometimes a battery module control unit. The busbar holders are complex in shape, and as such are expensive and difficult to produce. Also, busbar holders are often made of plastic, which may provide a fuel for combustion in the event of a battery fire. The present invention seeks to mitigate the above-mentioned problems. Alternatively or additionally, the present invention seeks to provide an improved busbar and/or battery and busbar arrangement.

### Summary of the Invention

The present invention provides, according to a first aspect, a battery busbar comprising:
a conducting contact plate configured to contact a terminal of a first battery cell and a terminal of a second battery cell, and
a lip extending perpendicular to the contact plate, the lip configured to engage with an external perimeter of one or both of the terminal of the first battery cell and terminal of the second battery cell.

The busbar may comprise a plurality of lips spaced from each other around the contact plate. Alternatively, a single lip may extend around the whole of the contact plate.

The lip or lips allows the busbar to be accurately positioned with respect to the terminal of the first battery cell and terminal of the second battery cell. As the lip or lips are configured to engage an external perimeter of one or both of the terminal of the first battery cell and terminal of the second battery cell, movement of the busbar relative to the terminals may be restricted. If the contact plate is considered to extend in an X-Y plane, the lip or lips may secure the contact plate in position relative to the terminals in the X-Y plane. A compressible insulator may be placed between the first cell and second cell, such that when the busbar is placed in contact with the terminals, the insulator is compressed. The compression of the insulator may further secure the position of the busbar with respect to the terminals by adding a bias that positively engages the terminals with the lip or lips of the contact plate.

The contact plate may comprise a top surface, i.e. a surface away from the surface that contacts the terminals, which may be welded. The contact plate may be welded to the terminals via the top surface. Such an arrangement will secure the contact plate to the terminals in the Z direction, thereby fully securing the busbar to the terminals. As the lip or lips position and hold the contact plate in position with respect to the terminals of the first battery cell and second battery cell, there is no need to provide a jig or busbar carrier to ensure the proper placement of the busbar. This simplifies construction of a power module made up of a plurality of battery cells, making construction potentially faster and less expensive. The busbar has no need of plastic components to hold the busbar in position, which may reduce the fire risk in the event of a battery malfunction.

The busbar may comprise one or more apertures in the contact plate.

The one or more apertures may provide a path through which a bolt extending from a battery terminal may pass, to which a nut may then be secured in order to hold the contact plate in position in the Z direction, thereby fully securing the busbar to the terminals. Alternative mechanical fixing means may be used to secure the contact plate in the Z direction, such as rods and split pins or similar.

The one or more apertures may provide a path through which wiring may pass, for example, wires connected to sensors linked with the battery cells. The busbar may comprise one or more clips or channels. The one or more clips or channels may provide a path through which wiring may pass and be secured. The clips or channels may form an integral part of the busbar, for example being machined out of the contact plate. The clips or channels may be secured to the contact plate by welding, adhesive, or an alternative mechanical fastening.

The conducting contact plate may comprise a metal material. The conducting contact plate may be stamped, or cut, from a sheet of metal, for example aluminium or copper. The lip or lips may be formed from the same piece of metal as the contact plate, and may be bent or folded in order to extend perpendicular to the contact plate. Alternatively, the lip or lips may be formed from a different piece of material to the contact plate, and may be welded or glued to the contact plate. The contact plate may be machined from a single piece of metal.

The present invention provides, according to a second aspect, a battery module comprising a first battery cell and a second battery cell, the first battery cell and second battery cell each comprising a pair of terminals, and a busbar connecting a terminal of the first battery cell to a terminal of the second battery cell,
wherein the busbar comprises a conducting contact plate connecting a terminal of the first battery cell and a terminal of the second battery cell, and a lip extending perpendicular to the contact plate, the lip engaged with an external perimeter of one or both of the terminal of the first battery cell and terminal of the second battery cell.

The battery cells may be metal ion battery cells, for example lithium ion battery cells, sodium ion battery cells, potassium ion battery cells, magnesium ion battery cells, or aluminium ion battery cells. The invention is applicable to any battery cells that have terminals that are connected with a busbar.

The busbar may comprise a plurality of lips extending perpendicular to the contact plate, each lip configured to engage with an external perimeter of one or both of the terminal of the first battery cell and terminal of the second battery cell.

The battery module may comprise a resiliently deformable insulating layer located between the first battery cell and the second battery cell. The insulating layer may be compressed prior to the connection of the busbar to a terminal of the first battery cell and a terminal of the second battery cell. Such compression may bias the terminals of the first battery cell and second battery cell to move apart from each other, if the busbar was not present to hold the terminals together. This bias may ensure a secure engagement of the lip or lips of the busbar to the perimeter of the terminal of the first battery cell and/or terminal of the second battery cell.

The busbar may be welded and/or mechanically fastened to the terminal of the first battery cell and terminal of the second battery cell.

One or more of the battery modules may comprise a battery pack.

According to a third aspect, the invention provides a method of manufacturing a battery module, the method comprising the steps of:
placing a first battery cell and second battery cell in proximity to one another,
placing a busbar according to the first aspect of the invention in contact with a terminal of the first battery cell and a terminal of the second battery cell, such that a lip of the busbar engages with a perimeter of one or both of the terminal of the first battery cell and terminal of the second battery cell,
and welding the busbar to the terminal of the first battery cell and terminal of the second battery cell.

The method provides a simple and quick way of securing a busbar in place, contrary to prior art methods of battery manufacture, which rely on the use of removable jigs and/or busbar holders.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a schematic view of a busbar and first and second battery cells according to a first embodiment of the invention;
- Figure 2: shows a schematic view of a busbar according to the invention, with the topside uppermost;
- Figure 3: shows the busbar of figure 2 with the underside uppermost; and

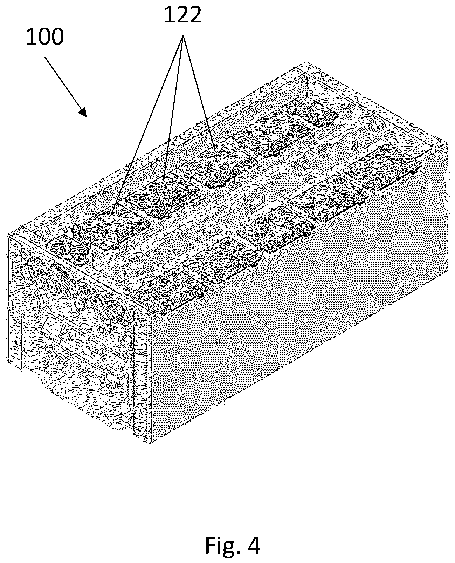

- Figure 4: shows a schematic view of a power module comprising a plurality of battery cells and busbars according to the invention.

### Detailed Description

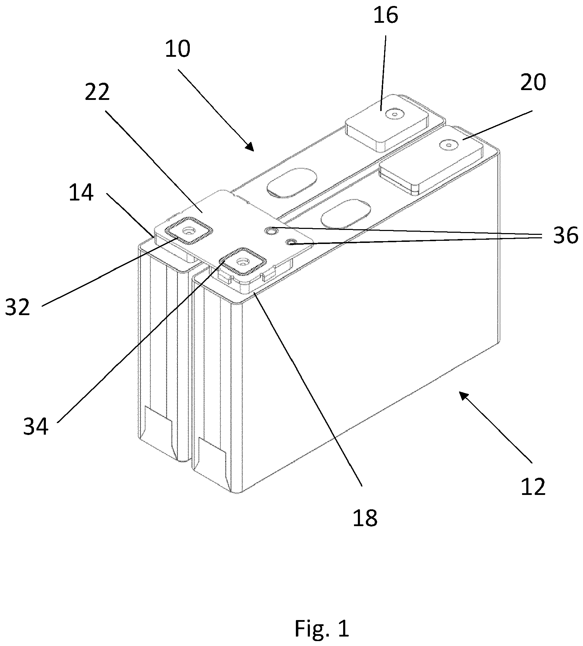

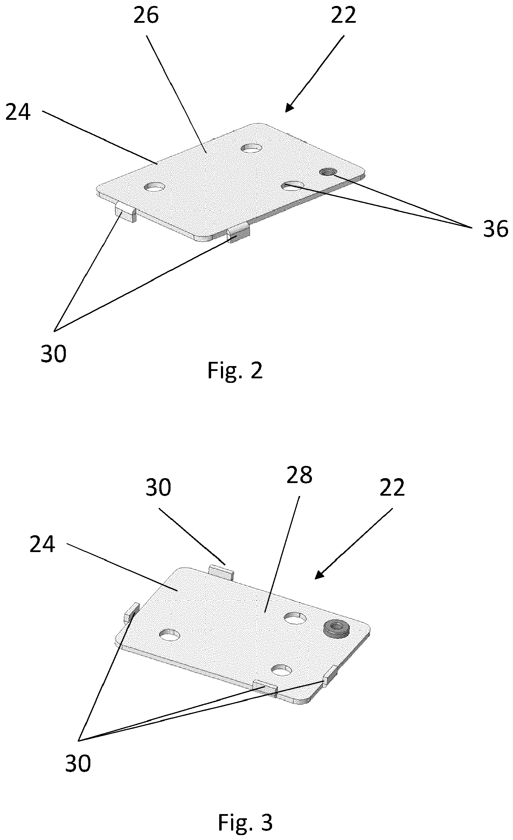

Figure 1 shows a first battery cell 10 and second battery cell 12. In this embodiment, the battery cells are lithium ion battery cells, but the skilled person will appreciate that the invention is equally applicable to any battery cells with terminals that are connected with a busbar. The first cell 10 comprises a first terminal 14 and second terminal 16, and the second cell 12 comprises a first terminal 18 and second terminal 20. A busbar 22 connects the first terminal 14 of the first cell 10 to the first terminal of the second cell 18. The busbar 22 comprises aluminium, but the skilled person will appreciate that alternative conducting materials, such as copper, may be used. A similar busbar will connect the second terminal 16 of the first cell 10 to the second terminal 20 of the second cell 12, but is not shown in figure 1 in order that the terminals are also shown prior to connection with a busbar. As can be seen in figure 1, each of the terminals 14, 16, 18, and 20, has an approximately rectangular profile, and protrudes from the main body of the cells 10 and 12, with a flat top section and an outer perimeter. The busbar 22, as best seen in figures 2 and 3, includes a contact plate 24 which has a planar top surface 26 and a planar bottom surface 28. The contact plate 24 is approximately rectangular, and on each side of the contact plate 24 is a lip 30 extending approximately perpendicular to the contact plate 24. As can be seen, the contact plate 24 is sized such that it covers the first terminal 14 of the first battery 10 and the first terminal 18 of the second battery 12. A busbar intended for connecting the second terminal 16 of the first battery 10 and second terminal 20 of the second battery 12 is similarly sized such that the terminals are covered by the contact plate. As the lips 30 are located at the sides of the contact plate 24, when the contact plate 24 is placed against the terminals 14, 18, the lips 30 engage with the corresponding part of the perimeter of the terminals 14, 18. If the contact plate 24 is considered to extend in the X-Y plane, then the lips 30 engage with the corresponding parts of the perimeter of the terminals in such a way that movement of the contact plate 24 in the X-Y plane is prevented. As this ensures that the busbar 22 is correctly located, the busbar 22 may then easily be welded to secure the busbar in the Z direction, for example being laser welded to the terminals 14, 18. There is no need, unlike in the prior art arrangements, for the use of a separate jig, or busbar carrier, to ensure the proper location of the busbar prior to welding. As such, there is no requirement to remove a jig, or provide a complicated and expensive busbar carrier. The welding process creates a weld 32 which secures the busbar 22 to the first terminal 14 of the first battery cell 10 and a second weld 34 which secures the busbar 22 to the first terminal 18 of the second battery cell 12.

The busbar 22 includes a plurality of apertures 36, which may be located to allow wiring to pass through the busbar 22 and connect to sensors which form part of, and/or measure characteristics of the battery cells 10, 12.

The busbar 22 in this embodiment is stamped from a sheet of aluminium, and the lips 30 are bent into position post stamping. The various apertures in the busbar 22 are drilled, also post stamping. The skilled person will appreciate that alternative manufacturing methods may be used to make the busbar 22, for example machining or casting the busbar. Whilst the busbar 22 is a one-piece component formed from the same piece of aluminium in this embodiment, the skilled person will appreciate that the busbar may comprise a plurality components welded or otherwise joined together. For example, the lips 30 may be secured to the contact plate 24 by welding.

In order to further improve the engagement of the busbar 22 with the terminals 14, 18, prior to welding, a resiliently compressible insulation sheet, for example, a suitable foam sheet (not shown), may be placed between main bodies of the first battery cell 10 and second battery cell 12. The thickness of the insulation sheet may be chosen such that in order to place the busbar 22 over the terminals 14, 18, such that the lips 30 engage with the perimeter of the terminals 14, 18, the first battery cell 10 and second battery cell 12 must be pushed together such that the insulation sheet is compressed. When the busbar 22 has been placed in position, the external compression of the first battery cell 10 and second battery cell 12 may be removed, such that the insulation sheet attempts to push the first battery cell 10 and second battery cell 12 apart. The lips 30 which engage with the terminals 14, 18, on opposite sides of the busbar 22 in the direction in which the insulation sheet is attempting to decompress, will then be positively engaged with the terminals 14, 18, and hold the first battery cell 10 and second battery cell 12 together. The same will be true of a busbar placed in position with respect to the second terminal 16 of the first battery cell 10 and second terminal 20 of the second battery cell 12.

Figure 3 shows a battery module which comprises a plurality of battery cells connected using busbars 122. In this embodiment, there are ten cells connected with busbars 122, and the connections are alternated so that one busbar connects respective terminals of the first and second battery cells, and another busbar connects respective terminals of the second and third battery cells and so on, such that the battery cells are connected in series.

Whilst the present invention has been described and illustrated with reference to particular embodiments, it will be appreciated by those of ordinary skill in the art that the invention lends itself to many different variations not specifically illustrated herein. For example, the busbar 22 may be secured to the terminals in the Z direction by a mechanical fastener, such as a nut and bolt arrangement which extends through the busbar 22. Alternatively or additionally, the busbar 22 may include one or more clips or channels which guide cables or wires located proximate to the busbar 22.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A battery busbar comprising:
a conducting contact plate configured to contact a terminal of a first battery cell and a terminal of a second battery cell, and
a lip extending perpendicular to the contact plate, the lip configured to engage with an external perimeter of one or both of the terminal of the first battery cell and terminal of the second battery cell.

2. A battery busbar as claimed in claim 1, comprising a plurality of lips spaced from each other around the contact plate, each lip configured to engage with an external perimeter of one or both of the terminal of the first battery cell and terminal of the second battery cell.

3. A battery busbar as claimed in claim 1, wherein a single lip is configured to extend around the whole of the contact plate.

4. A battery busbar as claimed in any preceding claim, wherein the contact plate comprises a top surface which is configured to be welded.

5. A battery busbar as claimed in any preceding claim, wherein the lip or lips are configured to position and hold the contact plate in place with respect to the terminals of the first battery cell and second battery cell.

6. A battery busbar as claimed in any preceding claim, wherein there are one or more apertures in the contact plate.

7. A battery busbar as claimed in claim 6, wherein the one or more apertures provide a path through which a bolt extending from a battery terminal may pass.

8. A battery busbar as claimed in claim 6, wherein the one or more apertures provide a path through which wiring may pass.

9. A battery busbar as claimed in any preceding claim, wherein the busbar comprises one or more clips or channels which provide a path through which wiring may pass and be secured.

10. A battery busbar as claimed in any preceding claim, wherein the conducting contact plate comprises a metal material.

11. A battery busbar as claimed in any preceding claim, wherein the conducting contact plate is stamped, or cut, from a sheet of metal.

12. A battery busbar as claimed in claim 10, wherein the lip or lips are formed from the same piece of metal as the contact plate, and are bent or folded in order to extend perpendicular to the contact plate.

13. A battery module comprising a first battery cell and a second battery cell, the first battery cell and second battery cell each comprising a pair of terminals, and a busbar connecting a terminal of the first battery cell to a terminal of the second battery cell,
wherein the busbar comprises a conducting contact plate connecting a terminal of the first battery cell and a terminal of the second battery cell, and a lip extending perpendicular to the contact plate, the lip engaged with an external perimeter of one or both of the terminal of the first battery cell and terminal of the second battery cell.

14. A battery module as claimed in claim 13, wherein the busbar comprises a plurality of lips extending perpendicular to the contact plate, each lip configured to engage with an external perimeter of one or both of the terminal of the first battery cell and terminal of the second battery cell.

15. A method of manufacturing a battery module, the method comprising the steps of:
placing a first battery cell and second battery cell in proximity to one another,
placing a busbar according to the first aspect of the invention in contact with a terminal of the first battery cell and a terminal of the second battery cell, such that a lip of the busbar engages with a perimeter of one or both of the terminal of the first battery cell and terminal of the second battery cell,
and welding the busbar to the terminal of the first battery cell and terminal of the second battery cell.
